**Europäisches Patentamt**

**European Patent Office**

**Office européen des brevets**

(19)

(11) Numéro de publication: **0 018 495**
**B1**

(12) **FASCICULE DE BREVET EUROPEEN**

(45) Date de publication du fascicule de brevet:
**27.01.82**

(21) Numéro de dépôt: **80101541.3**

(22) Date de dépôt: **24.03.80**

(51) Int. Cl.³: **B 25 H 1/16,** B 23 Q 3/10

(54) **Servante d'atelier.**

(30) Priorité: **07.05.79 FR 7911536**

(43) Date de publication de la demande:
**12.11.80 Bulletin 80/23**

(45) Mention de la délivrance du brevet:
**27.01.82 Bulletin 82/4**

(84) Etats contractants désignés:
**BE CH DE GB IT NL SE**

(56) Documents cités:
**BE-A-557 341**
**CH-A-369 721**
**FR-A-1 226 521**
**FR-A-1 571 428**
**FR-A-2 157 125**

(73) Titulaire: **S.A. MANUFACTURE D'ARMES ET CYCLES DE
CHATELLERAULT, Zone Industrielle Le Sanital,
F-86101 Chatellerault Cedex (FR)**

(72) Inventeur: **Rateau, Jean, 14 Square Jeanne d'Arc,
F-86100 Chatellerault (FR)**

BUNDESDRUCKEREI BERLIN

Servante d'atelier

L'invention concerne une servante d'atelier, composée essentiellement d'un trépied, d'un mât télescopique commandé par une pédale et d'une tête basculante porteuse d'un rouleau et d'une rampe à billes.

Dans les ateliers de menuiserie en particulier, les servantes d'atelier permettent de soutenir la pièce de bois à ouvrager, sur le même plan que celui de la table de travail de la machine (scie, raboteuse, mortaiseuse, toupie, etc . . .).

On connaît déjà des servantes d'atelier (FR-A-1 226 521, FR-A-1 571 428, FR-A-2 001 945 et FR-A-2 109 600) dont le blocage ou le déblocage du mât télescopique exige une intervention manuelle et dont la tête d'appui comporte seulement un rouleau ou une rampe à billes ou tout autre organe d'appui. La présente invention a pour but d'apporter à ces différents modèles de servantes, des dispositions particuliè-res offrant des possibilités d'utilisation plus rationnelles, plus pratiques et surtout, mieux adaptées à l'ensemble du besoin à satisfaire.

Les avantages obtenus, grâce à cette invention, consistent essentiellement en ceci que la tête d'appui basculante est équipée d'un rouleau et d'une rampe à billes. Cette disposition permet, sans réglage particulier, l'utilisation de l'un ou de l'autre des deux composants de ladite tête d'appui. C'est ainsi que le menuisier utilisera, de préférence, le rouleau pour travailler soit une poutre soit un bastaing, en règle générale, toutes les pièces de bois de faible largeur. Par contre, il préférera la rampe à billes pour tous les travaux de découpe et autres sur les planches et les panneaux et, en règle générale, toutes les pièces de bois de grande surface. En effet, le travail de celles-ci exige leur déplacement en toute direction par rapport à la table de travail de la machine. Les avantages obtenus, grâce à cette invention, consistent également en ceci que le déblocage du mât télescopique est obtenu à l'aide d'une pédale. Cette particularité libère les deux mains de l'opérateur pour un réglage rapide et précis de la hauteur désirée de la tête d'appui.

Dans ce qui suit, l'invention est exposée plus en détail, à l'aide de dessins représentant seulement un mode d'exécution.

La figure 1 est une vue en perspective de la servante dont la tête d'appui basculante est représentée en position opérationelle »rouleau«.

La figure 2 est une vue en perspective de cette tête représentée en position »rampe à billes«.

La figure 3 est une coupe transversale de la tête basculante.

La figure 4 est une coupe partielle longitudinale de cette même tête basculante.

La figure 5 est une coupe longitudinale du mât télescopique.

La figure 6 est une autre coupe longitudinale du même mât télescopique.

La figure 7 est une coupe transversale du mât télescopique.

La figure 8 montre un détail du système de blocage du mât télescopique.

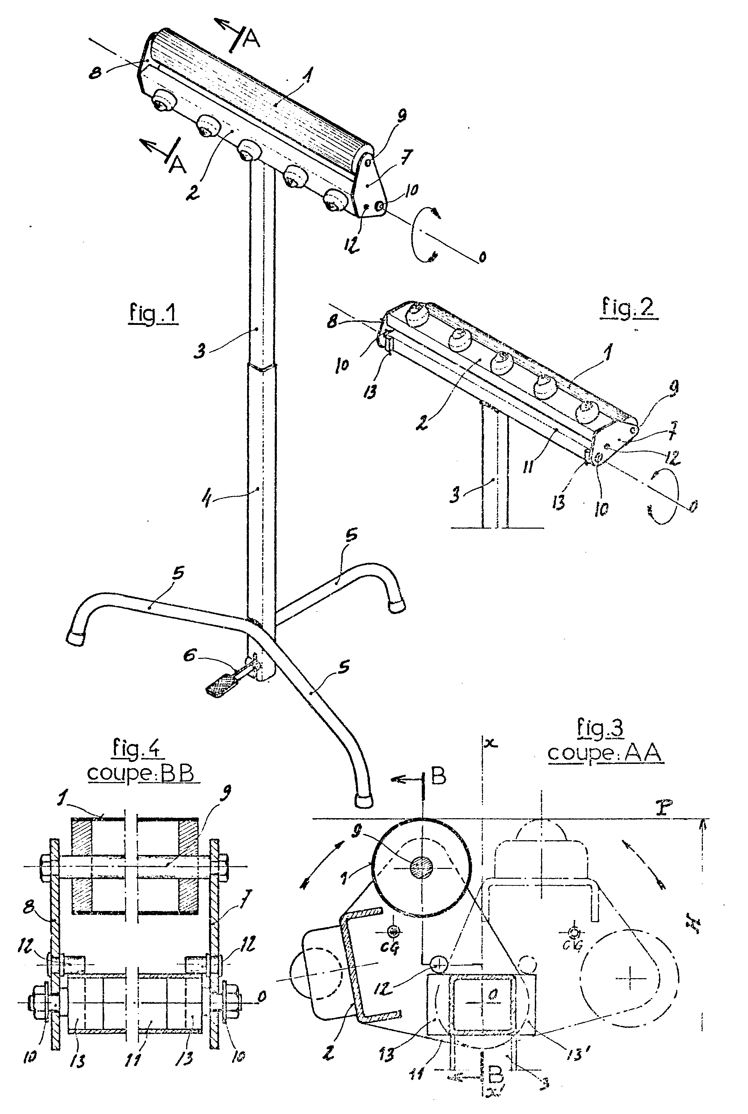

Suivant figures 1 et 2, la servante comporte un rouleau 1, une rampe à billes 2, un mât télescopique 3 et 4, un piétement 5 et une pédale de manoeuvre 6.

Suivant figures 1 à 4, la rampe à billes 2 est solidaire de deux flasques 7 et 8, entre lesquels le rouleau 1 peut tourner librement sur son axe 9. D'autre part, ces flasques 7 et 8 peuvent pivoter autour d'un axe 0 formé par les tourillons 10 solidaires de la traverse 11 reliée elle-même en son milieu à la partie supérieure du mât télescopique 3.

Toujours selon figures 1 à 4, cette disposition particulière permet donc d'obtenir, par un simple basculement de la tête d'un côté ou de l'autre soit la rampe à billes, soit le rouleau en positions opérationnelles.

Ces positions sont délimitées par deux ergots 12 fixés sur chacun des flasques 7 et 8, et venant s'appuyer alternativement sur les deux butées 13 et 13' fixées de part et d'autre de la traverse 11 de telle façon que quelle que soit la position choisie, la hauteur H de la tête d'appui nécessairement égale à celle du plan de travail P par rapport au sol, soit invariable pour une même hauteur préalablement déterminée de la servante.

Cette disposition particulière des ergots 12 et des butées 13 et 13' permet, d'autre part, un maintien de fait et automatique de la tête dans la position choisie, le centre de gravité CG de l'ensemble échappant alternativement de part et d'autre du plan de symétrie XX'.

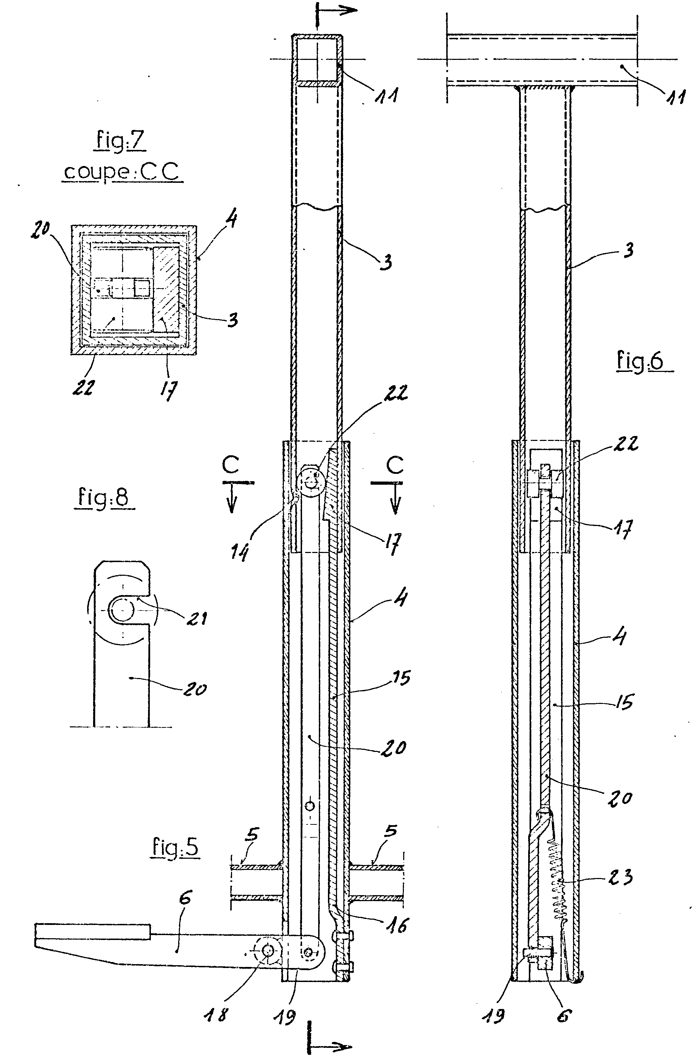

Suivant figures 5 à 8, le mât télescopique comporte deux tubes de section carrée 3 et 4, coulissant l'un dans l'autre, le tube à section la plus faible 3 étant situé à la partie supérieure du mât, et recevant à son extrémité haute, la traverse 11, support de la tête d'appui basculante. Dans la partie inférieure du tube 3 est pratiqué un bossage intérieur 14 dont l'utilité sera expliquée plus loin.

Sur le tube inférieur 4, de plus forte section afin d'autoriser un coulissement libre mais sans jeu excessif du tube 3, est fixé dans sa partie basse, un méplat 15 contre-coudé en 16 afin de laisser la libre circulation du tube 3. Ce méplat 15, dont la largeur est légèrement plus faible que la largeur intérieure du tube 3 et dont la longueur est sensiblement la même que celle du tube 4, comporte, à sa partie supérieure, une partie biseautée en forme de coin 17.

Egalement à la partie inférieure du tube 4 est articulée la pédale 6 pivotant autor de l'axe 18 solidaire du tube 4. Cette pédale 6 actionne, par l'intermédiaire de l'axe 19, la tringlerie 20 comportant à sa partie supérieure une échancrure 21 dans laquelle se trouve emprisonnée la gorge du galet-diabolo 22. Un fort ressort de tension 23 sollicite la tringlerie 20 et donc le galet-diabolo 22 vers le bas. Enfin, et toujours à la partie inférieure du tube 4 est fixé le piétement 5.

Le fonctionnement du système est le suivant:

Sollicité par le ressort 23 et par la tringlerie 20, le galet 22 est poussé vers le bas et tend ainsi à appliquer fortement le méplat 15 sur la paroi intérieure du tube 3 et ce, par la réaction du coin 17. Le coefficient de frottement des deux parois est suffisamment grand pour que le système reste en équilibre et que l'on puisse même soulever la servante sans qu'il y ait glissement relatif des tubes 3 et 4.

Lorsque la servante est chargée, le galet 22 tend à rouler vers le bas, d'où il résulte une pression encore plus forte du coin 17 sur la paroi du tube 3. Le système est auto-bloquant.

Pour déverrouiller le système, une pression du pied sur la pédale 6 remonte la tringlerie 20 et libère vers le haut le galet 22. Il n'y a plus de frottement entre le coin 17 et le tube 3 et la partie supérieure de la servante, rendue ainsi mobile, peut être réglée à toutes les hauteurs possibles tant que le pied opère une pression sur la pédale 6. Le fait de relâcher la pédale rebloque immédiatement le système à la hauteur désirée.

Le bossage 14 intérieur au tube 3 et venant prendre appui sous le galet 22 a pour but d'éviter un déboîtement intempestif des tubes 3 et 4 et limite ainsi la position haute maxi de la servante.

## Revendications

1. Servante d'atelier composée d'un trépied, d'un mât télescopique (3, 4), dont le système de blocage est commandé au moyen d'une pédale (6) et d'une tête d'appui caractérisée d'une part, en ce que la tête d'appui composée à demeure d'un rouleau (1) et d'une rampe à billes (2) bascule autour d'un axe O, formé par des tourillons (10), d'autre part en ce que l'amplitude de ce basculement est limitée au moyen de deux ergots (12) venant s'appuyer alternativement sur des butées (13 ou 13') suivant que l'on utilise le rouleau (1) ou la rampe à billes (2) et, en ce que la position des dits ergots (12) par rapport aux butées (13, 13') limite non seulement l'amplitude du basculement de la tête d'appui mais, en outre permet de maintenir la tête d'appui à la même hauteur H pré-réglée par rapport au plan de travail P en passant de l'utilisation rouleau (1) à l'utilisation rampe à billes (2) ou inversement.

2. Servante d'atelier selon 1 caractérisée en ce que l'amplitude du basculement limitée par les egots (12) et les butées (13 et 13') est d'une grandeur telle que le centre de gravité CG de la tête pivotant autour de l'axe O passe alternativement de part et d'autre d'un plan vertical X-X' passant par l'axe O de telle sorte que la tête est maintenue dans la position choisie rouleau (1) ou rampe à billies (2) sous l'effet de son propre poids.

3. Servante d'atelier, selon 1, caractérisée en ce que son mât télescopique (4 et 3) réalisé de manière connue en soi en tube carré, évite toute rotation intempestive de la tête d'appui.

4. Servante d'atelier, selon 1 et 3, caractérisée en ce que le système de blocage et de déblocage du mât télescopique (3, 4) est commandé d'une manière connue en soi par la pédale (6).

5. Servante d'atelier, selon 1 et 4, caractérisée en ce que la partie supérieure (3) du mât télescopique comporte un bossage intérieur (14) arrêté par le galet (22) limitant la course télescopique vers le haut pour éviter ainsi le déboîtement intempestif des deux parties constitutives (4 et 3) du dit mât.

## Patentansprüche

1. Werkstatt-Bedienungswagen bestehend aus einem Stativ, einem Teleskopmast (3, 4), dessen Blockiersystem durch eine Pedale (6) gesteuert wird und aus einem Auflagekopf, der sich einerseits dadurch auszeichnet, daß der Auflagekopf, der ständig von einer Rolle (1) und einer Kugelrampe (2) gebildet wird, sich um eine Achse (O) schwenken läßt, die ihrerseits von Drehzapfen (10) gebildet wird und andererseits dadurch, daß die Amplitude dieser Schwenkung mittels zweier Nocken (12) begrenzt wird, die wechselweise auf den Anschlägen (13 oder 13') auflagern je nachdem, ob man die Rolle (1) oder die Kugelrampe (2) benutzt und dadurch, daß die Stellung der besagten Nocken (12) in Bezug auf die Anschläge (13 und 13') nicht nur die Amplitude der Schwenkung des Auflagekopfes begrenzt, sondern außerdem dafür sorgt, daß der Auflagerkopf auf der gleichen voreingestellten Höhe H in Bezug auf die Arbeitsebene P gehalten wird, indem von der Benutzung Rolle (1) auf die Benutzung Kugelrampe (2) oder umgekehrt übergegangen wird.

2. Werkstatt-Bedienungswagen, gemäß 1 gekennzeichnet dadurch, daß die Amplitude der Schwenkung, die von den Nocken (12) und den Anschlägen (13 und 13') begrenzt wird, eine solche Größe hat, daß der Schwerpunkt CG des Kopfes, der sich um die Achse O schwenkt, wechselweise auf der einen und der anderen Seite einer senkrechten Ebene X-X vorbeiläuft und dabei so über die Achse O läuft, daß der Kopf in der gewählten Stellung (Rolle —1— oder Kugelrampe —2—) unter Einwirkung seines Eigengewichts gehalten wird.

3. Werkstatt-Bedienungswagen, gemäß 1 gekennzeichnet dadurch, daß sein Teleskopmast (4 und 3), der auf in sich bekannter Weise aus Vierkantrohr gebildet wird, jede ungelegene Drehung des Auflagerkopfes unterbindet.

4. Werkstatt-Bedienungswagen, gemäß 1 und 3 gekennzeichnet dadurch, daß das Blockier- und Freigabesystem des Teleskopmastes (3, 4) auf in sich bekannter Weise durch die Pedale (6) gesteuert wird.

5. Werkstatt-Bedienungswagen, gemäß 1 und 4 gekennzeichnet dadurch, daß der obere Teil (3) des Teleskopmastes eine Innenbossierung (14) besitzt, die durch die Walze (22) arretiert wird, die den Teleskophub nach oben begrenzt, um so das ungelegene Auseinandergehen der beiden Bestandteile (4 und 3) des besagten Mastes zu unterbinden.

## Claims

1. Workshop stand consisting of a tripod, telescopic mast (3, 4), with a locking system controlled by pedal (6) and a rest, characterized by the facts that the rest, permanently comprising roller (1) and ball bearing ramp (2), pivots around axis O, formed by trunnions (10), that the magnitude of pivoting movement is limited by two pins (12) bearing alternately on stops (13 or 13') depending on whether roller (1) or ball bearing ramp (2) is in use, and that the position of the above pins (12) with respect to stops (13 and 13') limits not only the magnitude of the pivoting movement of the rest, but also holds the rest at the same preadjusted height H with respect to the work surface P when switching from use of roller (1) to ball bearing ramp (2) or vice versa.

2. Workshop stand, as per 1, characterized by the fact that the magnitude of the pivoting movement, als limited by pins (12) and stopfs (13 and 13') is such that the center of gravity CG of the rest pivoting around axis O passes from one side to the other of vertical plan X-X' through axis O such that the rest is held in the selected position (roller — 1 — or ball bearing ramp — 2 —) by the effect of its own weight.

3. Workshop stand, as per 1, characterized by the fact that its telescopic mast (4 and 3), made in known manner of square tubing, prevents any undue rotation of the rest.

4. Workshop stand, as per 1 and 3, characterized by the fact that the locking and release system of telescopic mast (3, 4) is controlled in known manner by pedal (6).

5. Workshop stand, as per 1 and 4, characterized by the fact that upper section (3) of the telescopic mast includes internal bead (14) stopped by roller (22) limiting the upwards travel of the telescopic mast to prevent undue separation of the two sections (4 and 3) of said mast.

0 018 495

fig.1

fig.2

fig.4
coupe:BB

fig.3
coupe:AA

0 018 495

fig:7
coupe:CC

fig:8

fig:5

fig:6